# EUROPEAN PATENT APPLICATION

(11) **EP 1 434 384 A1**
(43) Date of publication of application: **30.06.2004**
(21) Application number: 03003760.0
(22) Date of filing: 19.02.2003
(51) Int. Cl.: H04L 9/32

(54) **Certificate path information management system and certificate management device**

(30) Priority: 27.12.2002 JP 2002378941
(71) Applicant: Hitachi, Ltd., Chiyoda-ku, Tokyo 101-8010 (JP)
(72) Inventor: Watanabe, Kiyoshi, Hitachi, Ltd., Int. Prop. Group, Chiyoda-ku, Tokyo 100-8220 (JP); Shimonosono, Hitoshi, Hitachi Ltd., Int.Prop.Group, Chiyoda-ku, Tokyo 100-8220 (JP)
(74) Representative: Strehl Schübel-Hopf & Partner

(57) **Abstract**

A system according to the present invention stores entry information (104) on a certificate issued by a certification authority in a path information list (11) in which path information on certificates is stored. When a path search request is received, the system searches for a certification authority chain based on the path information list (11), converts certification authority path information to certificate path information, and search for a certificate path.

## Description

### BACKGROUND OF THE INVENTION

### Field of the Invention

The present invention relates to a certificate path management system in the Public Key Infrastructure and more particularly to a certificate path management system that obtains certificate information using storage location information on certificates necessary for certificate path validation.

### Description of the Related Art

The Public Key Infrastructure (PKI) has been introduced to ensure safety in person-to-business and business-to-business communication. Digital signatures, encryption, certification, and non-repudiation services, provided in the public key infrastructure, are implemented by certificates issued to users. For the safe PKI services to be implemented among users, a receiver who has received a message from a sender must verify a path from the certification authority trusted by the receiver to the sender's certificate in some way or other. JP-A-2001-350406 discloses a path validation technology for use in basic path validation processing in which certificate path construction is performed first to obtain a certificate necessary for validation from a relying party and then path validation is performed for verifying the path chain.

### SUMMARY OF THE INVENTION

A bottleneck of this task is to find a certificate path, that is, a certificate chain. Today, to increase efficiency in finding a path during this task, all certificates are saved in one place, if possible, and a path is constructed while finding path information using the graph theory. Another way to perform this task is to construct a path by finding path information while searching all entries in various places for path information.

The problem with this method is that, as the PKI structure becomes complex, a long time is required for finding path information and therefore for obtaining certificates. When the PKI structure becomes complex, the certificate issue, revocation, update, and discarding performed in each of the certification authorities result in a complex relation, making it unrealistic to install a unified storage location, to manage certificates and their related information in an integrated location, or to collect certificates and related information in one place for integration.

In addition, certificate-based path information is generated for each certificate. This means that path information is managed for each issued certificate and that several new certificates are generated and unnecessary certificate are deleted when a certificate is updated, making path information management even more complex.

In view of the above problem, a system according to the present invention stores entry information on a certificate issued by a certification authority in a path information list in which certificate path information is stored. In response to a certificate path search request, the system searches for a certification authority chain based on the path information list, converts the certification authority path information into the certificate path information, and searches for the certificate path.

Other objects, features and advantages of the invention will become apparent from the following description of the embodiments of the invention taken in conjunction with the accompanying drawings.

### BRIEF DESCRIPTION OF THE DRAWINGS

FIG. 1 is a diagram showing the system configuration of a certificate path management system in one embodiment.
FIG. 2 is a diagram showing entry information 104 registered by a path registration device 100.
FIG. 3 is a diagram showing a path information list 11 held by a path management system 10.
FIG. 4 is a diagram showing attribute data included in a node shown in FIG. 3.
FIG. 5 is a diagram showing path request information sent from a terminal 140 to the path management system 10.
FIG. 6 is a diagram showing information of path search result sent from the path management system 10 to the terminal 140.
FIG. 7 is a diagram showing search result information obtained by a graph search.
FIG. 8 is a flowchart showing registration processing based on path entry information from the path registration device 100.
FIG. 9 is a flowchart showing processing in which a path is searched for in response to path request information.
FIG. 10 is a flowchart showing processing in which certificate storage locations necessary for searching for certificate paths are set after graph search processing in FIG. 9.
FIG. 11 is a flowchart showing processing in which certificate storage locations necessary for searching for certificate paths at update time are set after graph search processing in FIG. 9.
FIG. 12 is a flowchart showing processing in which the terminal 140 receives the information of path search result and obtains a certificate.
FIG. 13 is a flowchart showing the connection status of certification authorities.
FIG. 14 is a diagram showing the connection status of certificates issued by certification authorities.

### DETAILED DESCRIPTION OF THE INVENTION

An embodiment will be described in detail below with reference to the drawings. It should be noted that the present invention is not limited to this embodiment.

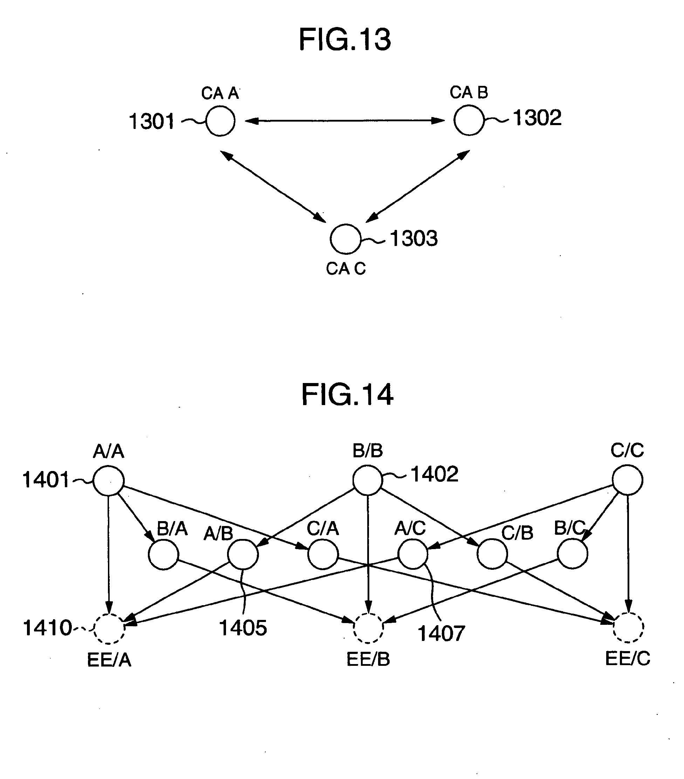

First, with reference to FIG. 13 and FIG. 14, the connection status of certification authorities that issue certificates will be described. A search for a certificate path is based on this connection status.

FIG. 13 shows a status in which three certification authorities (CA), A, B, and C, are interconnected. In FIG. 13, a node 1301 represents certification authority A, a node 1302 represents certification authority B, and a node 1303 represents certification authority C, respectively. However, in reality, whether or not a certification authority is connected to another certification authority is determined based on whether or not the certificates issued by those certification authorities are connected. To determine that the certificates are connected, it is necessary to search for the connection path.

FIG. 14 is a diagram showing the connection status of the certificates issued from the certification authorities. In FIG. 14, a node A/A 1401 represents a self-signed certificate issued from certification authority A, and a node B/B 1402 represents a self-signed certificate issued from certification authority B (and so on). A node A/B 1405 represents a cross certificate issued from certification authority B to certification authority A, and a node A/C 1407 represents a cross certificate issued from certification authority C to certification authority A (and so on). A node EE/A 1410 represents an end entity certificate issued from certification authority A to an end entity (EE) (and so on). The end entity is a person who holds a self-signed certificate issued from some certification authority.

To confirm the chain between certification authority A and certification authority B, it is necessary in FIG. 14 to check the certificate path composed of the self-signed certificate B/B (node 1402) issued from certification authority B, the cross certificate A/B (node 1405) issued from certification authority B to certification authority A, and the end entity certificate EE/A (node 1410) issued from certification authority A. The paths of other certification authorities are confirmed in the same way.

When a certificate issued from a certification authority is updated in FIG. 14, the connection status of the nodes for the updated certificate is added FIG. 14.

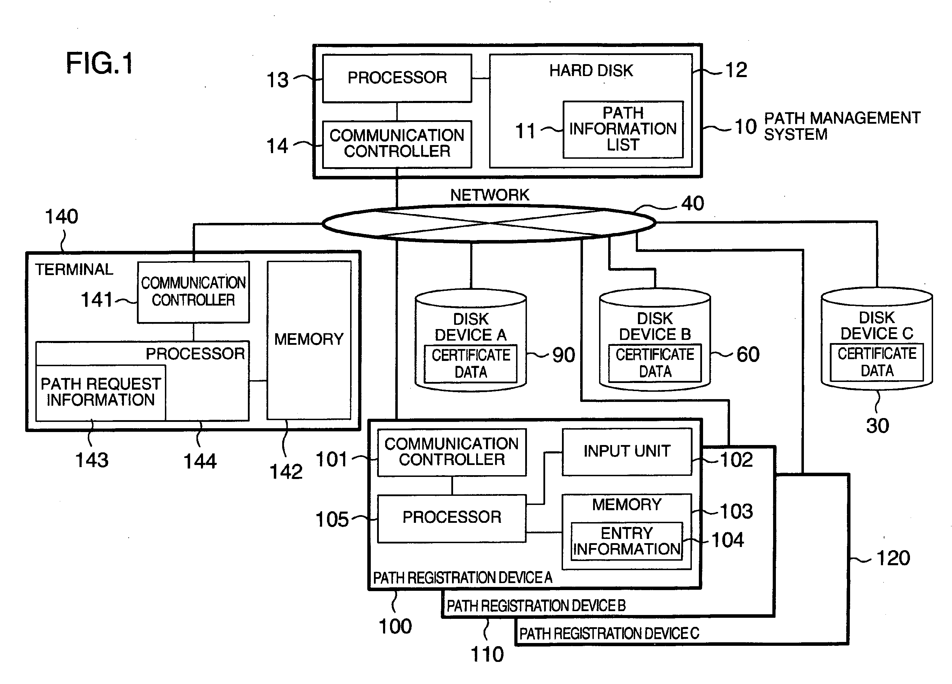

FIG. 1 shows the configuration of a certificate chain search support system that is one embodiment of the present invention. Referring to FIG. 1, a path management system 10, path registration devices 100, 110, and 120, a terminal 140, and disk devices 90, 60, and 30 are connected via a network 40. The path management system 10, path registration devices 100, 110, and 120, and the terminal 140 each comprise an information processor, such as a personal computer, composed of a processor 13 that acts as a processing unit, a hard disk 12 that is a storage device, a communication controller 14 that sends or receives data, and so on. The network 40 represents the Internet, other communication lines, or leased lines.

The path registration devices A 100, B 110, and C 120, each installed in the certification authority, registers the storage location of a certificate issued from the certification authority. The path registration device A 100 comprises a memory 103 in which entry information 104 is stored, a processor 105 that performs control processing, a communication controller 101, and an input unit 102. The processor 105 adds information on the storage location of a certificate, which is entered from the input unit 102 for registration, to the entry information 104 stored in the memory 103, generates information to be sent to the path management system 10, and sends the generated information using the communication controller 101. The path registration devices B 110 and C 120 have the same configuration.

The path management system 10 comprises the communication controller 14 that sends or receives data, the hard disk 12 in which various data is stored, and the processor 13 that controls those components and performs processing for them. Upon receiving the entry information 104 from the path registration devices A 100, B 110, and C 120 via the communication controller 14, the processor 13 stores the received information in a path information list 11 in the hard disk 12. If entry information is received from a new certification authority, the processor 13 adds a new node to the path information list and stores the entry information 104 on the new certification authority in that node. If an update request is received from one of the existing certification authorities, the processor 13 searches the path information list for the node of the certification authority and stores the update data in that node. In this case, the update date of the path information list 11 is updated.

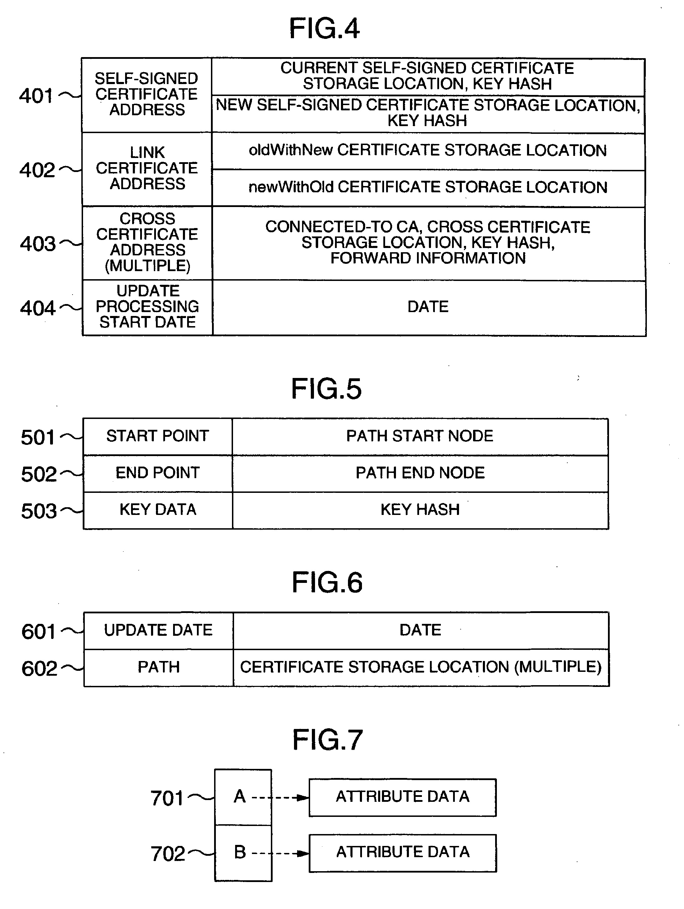

When the path management system 10 receives path request information 143, which is certificate path search request information stored in the terminal 140, via the communication controller 14, the processor 13 first confirms the certification authority chain. To do so, the processor 13 calls the path information list 11 stored in the hard disk 12 and performs a graph search using a connected-to certification authority name included in the cross certificate address field 403 (FIG. 4) of the attribute data. After the certification authority chain is confirmed, the processor 13 uses the self-signed certificate address 401, link certificate address 402, and "cross certificate storage location" in the cross certificate address field 403 of the attribute data shown in FIG. 4 to convert the certification authority chain to a certificate chain. Then, the processor 13 stores the conversion result in the hard disk 12 as the information of path search result 602 (FIG. 6) and sends the information to the terminal 140 via the communication controller 14.

The terminal 140 comprises a processor 144, a communication controller 141, and a memory 142. The processor 144 generates path request information 143 and sends the information to the path management system 10 via the communication controller 141. When the terminal 140 receives information of path search result from the path management system 10, the processor 144 generates certificate data acquisition information to acquire certificate data from the disk devices A 90, B 60, and C 30.

In this embodiment, the path registration devices A 100, B 110, and C 120 installed in the certification authorities each store the entry information 104 including the name of its own (certification authority) and the storage location address of a certificate issued from the certification authority. The communication controller 101 sends the entry information 104 to the path management system 10. The entry information 104, which is data identifying the connected-to certification authorities of this certification authority, includes data necessary for identifying certificate paths.

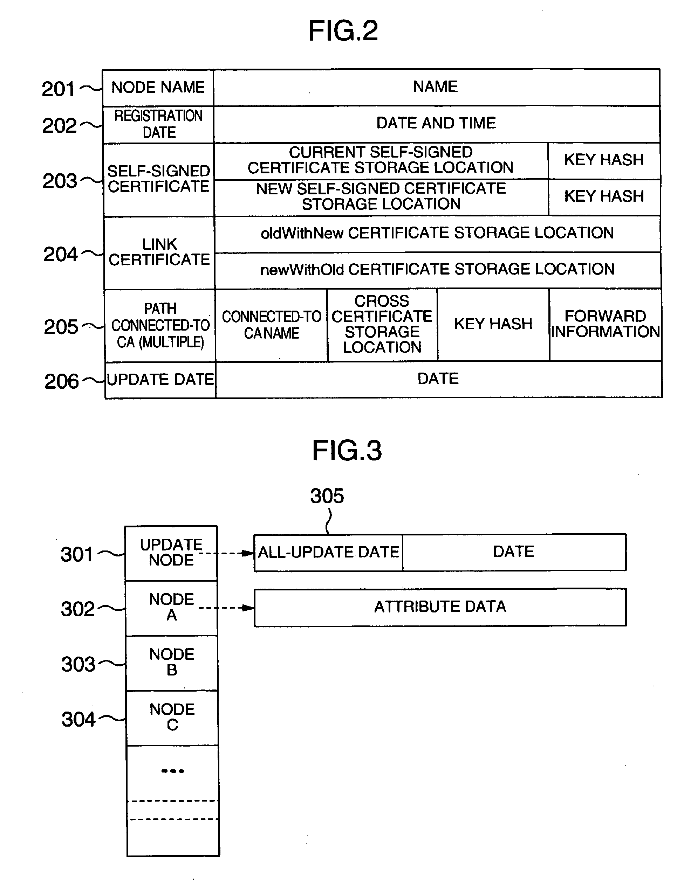

The entry information 104 is stored in the path information list 11 in the path management system 10 for use as the attribute data to be used as the key at certificate path search time. The path information list 11 is composed of nodes and their attribute data. The details are shown in FIG. 3.

FIG. 2 is a diagram showing the entry information 104 registered by the path registration device 100 with the path management system 10. The path registration device 100 has the following registration information that is sent to the path management system 10. A node name field 201 contains the name of the certification authority. A registration date field 202 contains a date and a time. A self-signed certificate field 203 contains the location where the current self-signed certificate is stored and hash information identifying the self-signed certificate and, as an option, the location where the self-signed certificate to be used after updating is stored and hash information identifying the self-signed certificate. A link certificate field 204 contains certificate chain information, which is used when the certificate is updated, to indicate the certificate chain to a new self-signed certificate that is used after updating. This field contains information on the two storage locations: one is the storage location of the oldWithNew certificate that is a certificate created by signing the current public key using the private key of the new certificate and the other is the storage location of the newWithOld certificate that is a certificate created by signing the public key of the new certificate using the private key of the current certificate to establish a certificate chain to the new self-signed certificate to be used after updating. A path connected-to certification authority field 205 contains a certification authority to which this certification authority is connected. This field contains a certification authority name that is the name of the connected-to certification authority, the storage location where the cross certificate is stored, hash information identifying the cross certificate, and forward information identifying which cross certificate data is to be acquired. An update date field 206 contains date information. The update date refers to a date on which the update of the self-signed certificate from the current self-signed certificate to the new self-signed certificate is started.

The certification authority need not fill in all data but may set only data necessary for registration.

FIG. 3 shows the path information list 11 held by the path management system 10. The list structure is first generated as the data structure and, after that, attribute data is stored in the structure as additional information. The data chain is established by pointers. The first node, an update node 301 indicating the update date, contains update date data 305. Following this node, nodes 302, 303, and 304, each identifying a registered certification authority name, are included in the list and each node contains attribute data. The details of attribute data are described below with reference to FIG. 4.

FIG. 4 shows attribute data held by the nodes 302, 303, 304, and so on included in the path information list 11 (FIG. 3). The attribute data is data included in the entry information 104 sent from the path registration device 100 to the path management system 10. The self-signed certificate address field 401 contains the data included in the self-signed certificate field 203 of the entry information. The link certificate address field 402 contains the data included in the link certificate field 204 of the entry information. The cross certificate address field 403 contains the data included in the path connected-to certification authority field 205 of the entry information. The attribute data may have two or more copies of this filed. An update processing start date field 404 contains the data included in the update date field 206 of the entry information.

FIG. 5 shows the content of path request information 143 that is a request sent from the terminal 140 to the path management system 10. A start point field 501 contains a certification authority name (path start node). The start point 501, which means the certification authority trusted by a path information requestor, indicates the certification authority of the start (start point) of the path when the certification authority path chain is confirmed. An end point field 502 also contains a certification authority name (path end node). The end point 502 is the certification authority trusted by the certification authority at the other end of the path. A key hash field 503 contains hash information identifying the certificate of the certification authority trusted by the path information requestor.

FIG. 6 shows information of path search result returned from the path management system 10 to the terminal 140. An update date 601, which means the update date of path information, is information to be compared with the information in the cache of the terminal 140. This comparison indicates whether the path information is later than the information in the cache. A path field 602 contains path information on the location where the certificate is stored. The information of path search result may include two or more copies of this field. The terminal 140 is able to acquire an actual certificate based on this information.

FIG. 7 shows search result information generated by graph search processing. This information is a result of graph search processing using the path information list in FIG. 3 and the path request information in FIG. 5. This information is also configured as a list structure, with the top indicating the start point and the bottom indicating the end point. A node 701 is the start point, and a node 702 is the end point. Each node has attribute data.

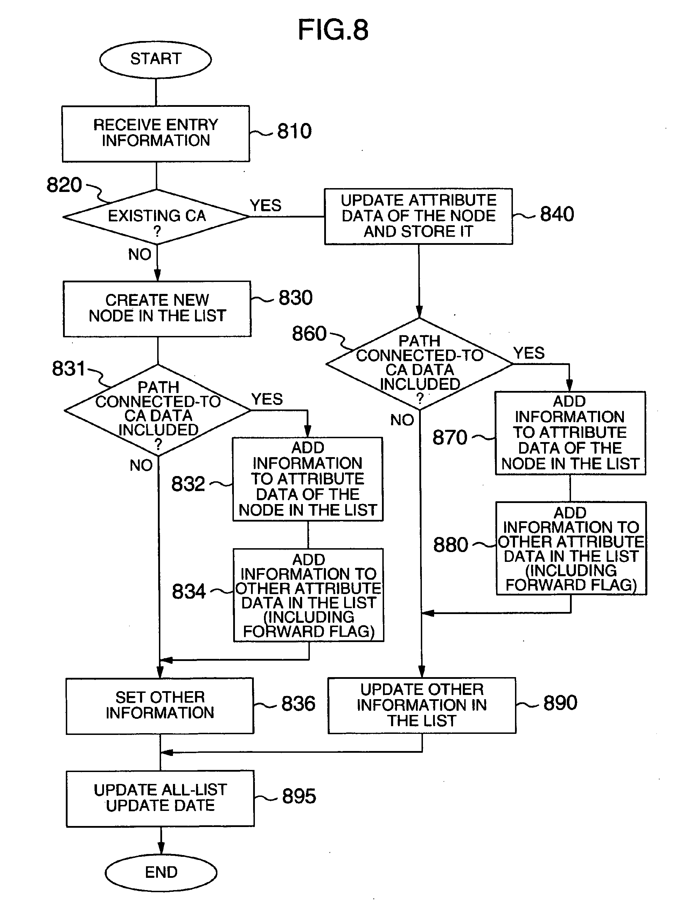

FIG. 8 is a flowchart showing how the path registration device 100 registers the entry information 104 with the path management system 10. First, the path registration device 100 sends the entry information 104 (shown in FIG. 2) including the node name 201, registration date 202, self-signed certificate 203, link certificate 204, one or more path connected-to certification authorities 205, and update date 206 indicating the update period of the self-signed certificate via the network 40, and the path management system 10 receives this entry information (step 810). The path management system 10 compares the node name 201 with the names of the nodes 302, 303, and 304 included in the path list shown in FIG. 3 to see if the entry information is received from a new certification authority or from an existing certification authority (step 820). The node name, usually the issuer name included in the issuer area of the certificate, may be any name that can be uniquely identified. However, once a unique name is used, it must be used to refer to the same node for unique identification.

If it is found, as a result of checking in step 820, that the entry information is sent from a new certification authority, the path management system 10 creates a new node after the node 304 in the path list (FIG. 3), generates a new attribute data structure, and sets the initial value of NULL in the structure (step 830). Then, the path management system 10 checks if the received entry information includes the path connected-to certification authority data 205 (step 831). If that data is included, the path management system 10 stores the connected-to certification authority name, cross certificate storage location, and forward information into the cross certificate address field 403 (FIG. 4) of the generated attribute data structure (step 832). If the path connected-to certification authority field 205 includes forward information, the path management system 10 searches for a node whose connected-to certification authority name in the cross certificate address field 403 included in the attribute data (FIG. 4) of the node, which is indicated by the path connected-to certification authority name in the path connected-to certification authority field 205, matches the node name of this new node, sets the cross certificate storage location included in the path connected-to certification authority field 205 into the cross certificate storage location in the cross certificate address field 403, and also sets the forward information (step 834). The path management system 10 stores the self-signed certificate data 203 of the entry information (FIG. 2) into the self-signed certificate address field 401 (FIG. 4) of the attribute data, the link certificate 204 into the link certificate address field 402, and the update date field 206 into the update processing start date field 404 (step 836).

If it is found, as a result of checking in step 820, that the entry information is received, not from a new certification authority, but from an existing certification authority (step 820), the path management system 10 searches the path information list 11 for the node having the same name as the node name 201 in the entry information 104 (FIG. 2) and stores data to be updated into the attribute data of the node (step 840). Next, the path management system 10 checks if the entry information includes the path connected-to certification authority data 205 (step 860) and, if the data is included, stores the connected-to certification authority name, cross certificate storage location, and forward information in the cross certificate address field 403 of the generated attribute data as in step 832 (step 870). If the path connected-to certification authority data 205 includes forward information, the same processing as that in step 834 is executed (step 880). The other information included in the entry information is stored in the attribute data (step 890). When it is found, in steps 831 and 860, that the entry information includes two or more path connected-to certification authority fields 205, there are two or more cross certificate address fields 403; therefore, a new storage area is allocated for each connected-to certification authority for storing data therein. This prevents the data of two or more path connected-to certification authorities from being stored in the same storage area. After storing data on all paths, the all-update date 305 in the path information list is changed to the registration date 202 (step 895). In this way, the latest path information list is registered.

The processor 13 in the path management system 10 executes a program to implement the processing in the flowchart described above. This program may be stored on a computer-readable storage medium (such as a hard disk 12).

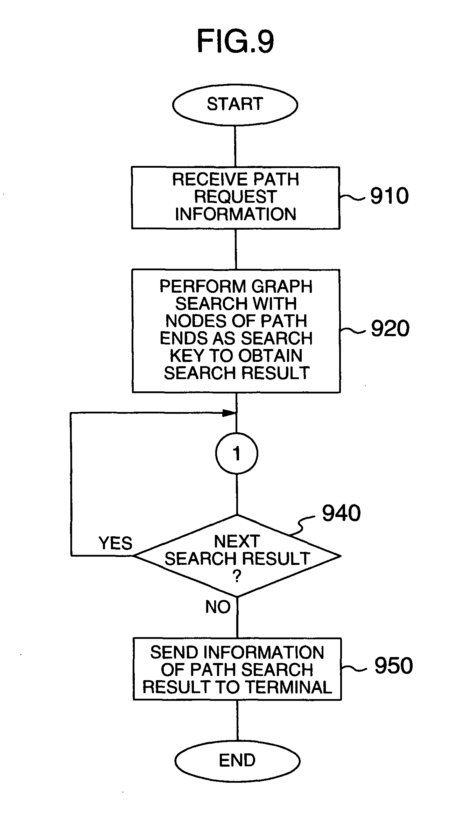

FIG. 9 is a flowchart showing processing executed from the time path request information is received to the time information of path search result is sent. The terminal 140 sends path request information 143 composed of a start point 501 indicating a path start node, an end point 502 indicating a path end node, and key hash data 503 on the self-signed certificate of the start point (see FIG. 5) to obtain the certificate chain and the certificate storage location, and the path management system 10 receives this information (step 910). The path management system 10 performs graph search processing with the start point 501 and the end point 502 as the search key, wherein the start point 501 is the path start node and the end point 502 is the path end node (step 920). If it is found, as a result of this path search, that there is a certification authority chain, the path management system 10 converts the certification authority chain to a certificate chain.

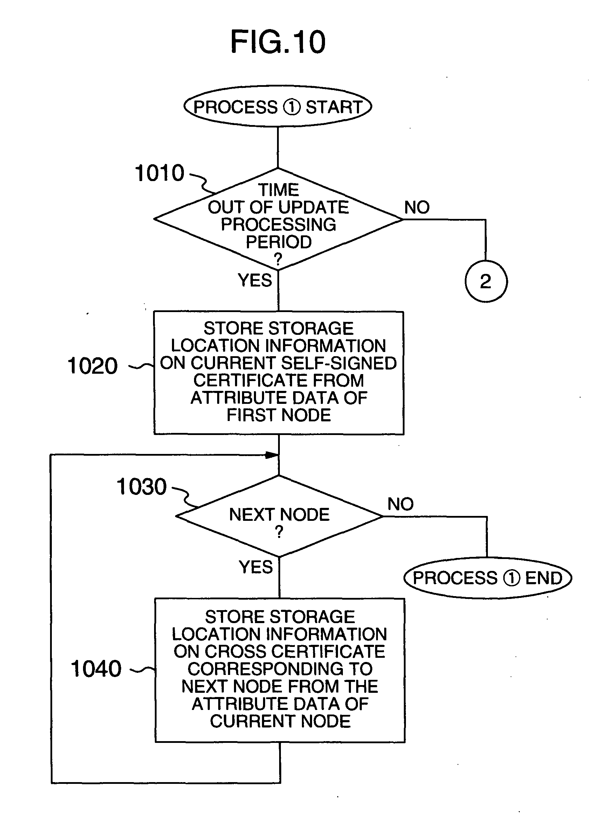

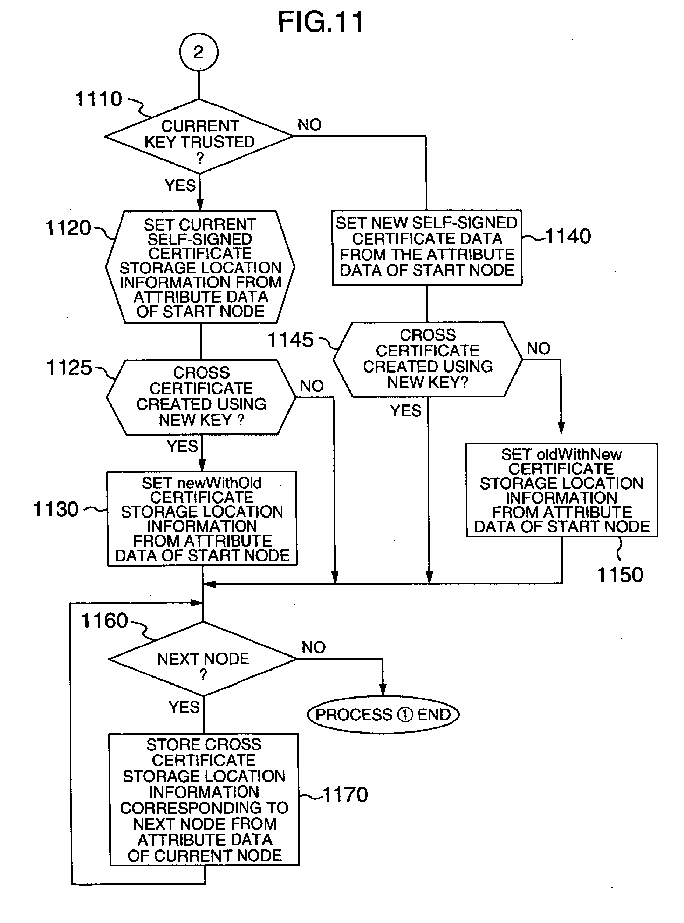

The subsequent processing will be described in detail with reference to the flowcharts shown in FIGS. 10 and 11.

In FIG. 10, the path management system 10 first checks if the time of day is within the update processing period to confirm the certificate chain (step 1010). This check is made to determine if only the storage location of the current self-signed certificate is required or if the storage locations of both the current self-signed certificate and the new self-signed certificate must be confirmed. If it is found in step 1010 that the time of day is out of the update processing period, the current self-signed certificate storage location in the self-signed certificate address field 401 of the attribute data of the start node 701 (FIG. 7) obtained as the path search result is stored in the path field 602 of the information of path search result (FIG. 6) (step 1020). That is, this storage location is stored as the first path of the information of path search result. Next, the path management system 10 checks if there is the next node (step 1030). If there is the next node, a new path area is created in the information of path search result (FIG. 6) and, in that area, the cross certificate storage location information corresponding to a cross connection name that matches the next node name, as well as the forward information (if forward information is included in the attribute data), is stored from the attribute data of the current node 701 (step 1040). Then, the path management system 10 checks again if there is the next node (step 1030) and, if there is the next node, steps 1040 and 1050 are repeated. Therefore, the processing in those steps is repeated until the last node is reached. If it is found in step 1030 that there is not the next node, control is passed to step 940 in FIG. 9. In step 940, the path management system 10 checks if the graph search processing has produced two or more results. If there are two or more results, the processing in FIGS. 10 and 11 is repeated based on the next search result. If it is found in step 940 that there are not two or more search results, that is, there is not the next search result, the path management system 10 sends the information of path search result, created by extracting information from the path information list 11 in FIGS. 9-11, to the terminal 140 (step 950).

If it is found in step 1010 in FIG. 10 that the time of day is within the update processing period, the processing shown in FIG. 11 is executed. When the time of day is within the update processing period, the path management system 10 must determine if the currently effective self-signed certificate is to be trusted or if the new self-signed certificate is to be trusted. When the time of day is within the update processing period, there may be two or more self-signed certificates to be trusted. In that case, it is possible that the same certification authority issues two different certificates. Thus, which certificate is to be trusted is to determine from which self-signed certificate the certificate is issued. Therefore, to determine which self-signed certificate is to be trusted, the key hash included in the key data field 503 of the path request information 143 is compared with the key hash included in the self-signed certificate address field 401 to determine which key is to be trusted (step 1110). More specifically, the processing of this step is as follows. A check is made from which self-signed certificate the certificate is issued, the hash value is calculated from the key hash included in the key data of the self-signed certificate, and the resulting value is stored in the path request information (FIG. 5).

If it is determined, as a result of determination in step 1110, that the currently effective self-signed certificate is to be trusted, the current self-signed certificate storage location in the self-signed certificate address field 401 of the attribute data of the start node 701 is stored in the path field 602 of the information of path search result (FIG. 6) (step 1120). That is, this storage location is stored as the first path. Next, whether or not the cross certificate is issued using the new key is checked by comparing the key hash of the current self-signed certificate in the self-signed certificate address field 401 included in the attribute data of the start node 701 with the key hash in the cross certificate address field 403 (step 1125). If the cross certificate is issued using the new key, a new storage area is created in the path field in the information of path search result (FIG. 6) and, in that area, the newWithOld certificate storage location information stored in the link certificate address field 402 in the attribute data of the start node 701 is stored (step 1130). That is, this storage location is stored as the second path.

Next, a check is made if there is the next node that follows the current node 701 of the path search result (FIG. 7) (step 1160). If it is found that there is the next node, a new path area is created in the information of path search result and, in that area, the cross certificate storage location corresponding to the cross connection name that matches the next node name, as well as the forward information (if there is forward information in the attribute data), is stored from the attribute data of the current node 701 (step 1170). A check is made again if there is the next node and, if there is the next node, steps 1170 and 1180 are repeated. If there is not the next node, control is passed to step 940 in FIG. 9. That is, the processing in steps 1170 and 1180 is repeated until the last node is reached.

If it is found in step 1125 that the cross certificate is not issued using the new key, the processing in step 1160 described above is executed.

If it is determined in step 1110 that the new self-signed certificate is to be trusted, the new self-signed certificate storage location information included in the self-signed certificate address field 401 of the attribute data of the start node 701 is stored in the path field 602 of the information of path search result (FIG. 6) (step 1140). Next, the key hash of the new self-signed certificate in the self-signed certificate address field 401 included in the attribute data of the start node 701 is compared with the key hash in the cross certificate address field 403 to check if the cross certificate is issued using the new key (step 1145). If it is found as a result of the check that the cross certificate is issued using the new key, the processing in step 1160 described above is executed. If it is found that the cross certificate is not issued using the new key, a new path area is created in the path field in the information of path search result (FIG. 6) and, in that area, OldWithNew certificate storage location in the link certificate address field 402 included in the attribute data of the start node 701 is stored (step 1150).

If it is found in step 1030 in FIG. 10 or in step 1160 in FIG. 11 that there is not the next node, control is passed back to the processing in FIG. 9 to check if there are two or more graph search results (step 940). If there are two or more results, the processing in the flowchart in FIG. 10 or FIG. 11 is repeated; if there are not two or more results, the information of path search result created by extracting information from the path information list 11 in the flowchart in FIG. 10 or FIG. 11 is sent to the terminal 140 (step 950). Although the information is sent to the terminal 140 in step 950, it may be output to an external device or displayed on a display.

The processor 13 in the path management system 10 executes a program to implement the processing in the flowcharts in FIGS. 9-11. This program may be stored on a computer-readable storage medium (such as a hard disk 12).

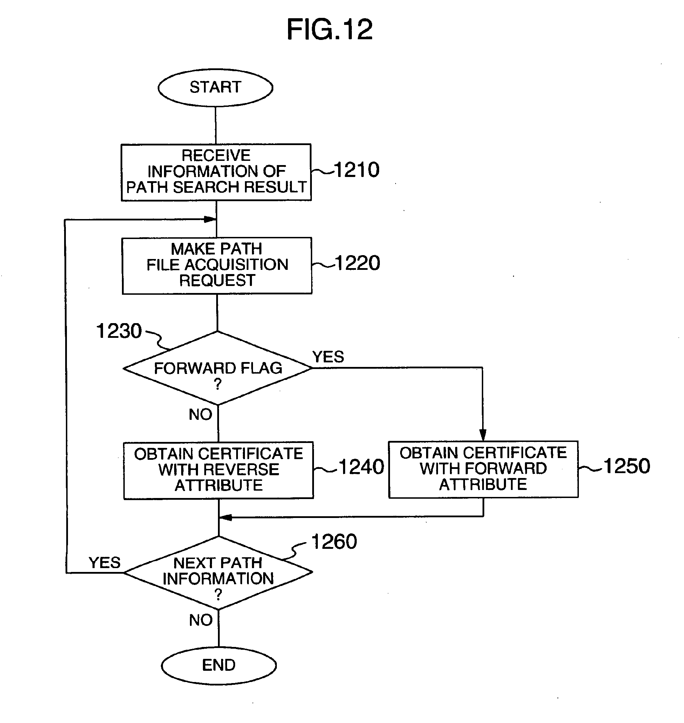

FIG. 12 is a flowchart showing processing in which the terminal 140 obtains certificate data after obtaining the information of path search result (FIG. 6). The terminal 140 receives the information of path search result from the path management system 10 (step 1210). Next, the terminal 140 sequentially obtains the storage location and forward information from the received path information and, via the network 40, obtains certificate data from the disk devices 90, 60, and 30 (step 1220). The terminal 140 checks if forward information is included in the path information (step 1230). If forward information is included, the terminal 140 obtains a certificate with the forward attribute (step 1250); if forward information is not included, the terminal 140 obtains a certificate with the reverse attribute (step 1240). Then, the terminal 140 checks if there is the next path information (step 1260) and, if there is the next path, passes control back to step 1220 to repeat processing. If there is not the next path, the processing is terminated.

The forward attribute and the reverse attribute are described below. A cross certificate has one of two attributes, forward and reverse. A certificate with the reverse attribute is a certificate issued from a certification authority trusted by an issuer, which issues a self-signed certificate, to some other certification authority. A certificate with the forward attribute is a certificate issued from some other certification authority to a certification authority trusted by an issuer.

It should be further understood by those skilled in the art that although the foregoing description has been made on embodiments of the invention, the invention is not limited thereto and various changes and modifications may be made without departing from the spirit of the invention and the scope of the appended claims.

## Claims

1. A certificate path information management system that manages path information used for validation of certificates issued by certification authorities, comprising:
a path registration device (100) that is installed in a certification authority issuing a certificate and that stores entry information (104) on the certificate issued by the certification authority;
a path management device (10) that includes a path information list (11), which stores path information on the certificates, for storing the entry information (104) sent from the path registration device (100) into the path information list (11); and
a terminal (140) that sends path request information (143) on a certificate to be verified to said path management device (10),
wherein, in response to the path request information (143) received from said terminal (140), said path management device (10) searches the path information list (11) for path information on the certificate and sends a result of the search to said terminal (140).

2. The certificate path information management system according to claim 1,
wherein, in response to the path information on the certificate from said path management device (10), said terminal (140) accesses an external device in which information on the certificate is stored to obtain information on the certificate.

3. The certificate path information management system according to claim 1,
wherein the path request information (143) sent by said terminal (140) to said path management device (10) includes information on a certification authority that is a path start point and information on a certification authority that is a path end point.

4. The certificate path information management system according to claim 1,
wherein said path management device (10) checks whether the entry information (104) sent from said path registration device (100) is information already included in the path information list (11) or new information before updating the information in the path information list (11).

5. The certificate path information management system according to claim 1,
wherein the path information list (11) is information identifying a connected-to certification authority of the certification authority that issues the certificate.

6. The certificate path information management system according to claim 1,
wherein the entry information (104) includes information identifying a storage location of the issued certificate.

7. A certificate path management system (10) that manages certificate path information on certificates issued by certification authorities, comprising:
a sending/receiving unit (14) that receives entry information (104) on the certificates issued by the certification authorities;
a storage unit (12) that stores a path information list (11) in which path information on the certificates is stored; and
a processor (13) that adds the entry information (104) received by said sending/receiving unit (14) to the path information list (11) stored in said storage unit (12).

8. The certificate path management system (10) according to claim 7,
wherein, when said sending/receiving unit (14) receives path request information(143) on a certificate, said processor searches the path information list (11) for path information on the certificate specified by the path request information (143) and
said sending/receiving unit (14) sends the search result.

9. The certificate path management system (10) according to claim 7,
wherein said processor (13) checks whether the entry information (104) received by said sending/receiving unit (14) is entry information (104) from a new certification authority or entry information (104) from an existing certification authority and, if the entry information (104) is from an existing certification authority, updates information on the certification authority.

10. The certificate path management system (10) according to claim 7,
wherein the path information list (11) includes nodes each identifying a certification authority and wherein each node includes at least attribute information including a storage location of a certificate certified by the certification authority.

11. The certificate path management system (10) according to claim 8,
wherein, in response to the path request information (143), said certificate path management system (10) searches for a certification authority path based on the attribute information in the path information list (11) and, in addition, converts the certification authority path to a certificate path to search for certificate path information.

12. A certificate path management method for managing certificate path information on a certificate issued by a certification authority, comprising the steps of:
receiving entry information (104) on a certificate issued by the certification authority;
storing a path information list (11) in which certificate path information on certificates is stored;
checking if the received entry information (104) is received from a new certification authority;
if the entry information (104) is received from a new certification authority, creating a node corresponding to the new certification authority in the path information list (11); and
adding the received entry information (104) as attribute information on the node.

13. The certificate path management method according to claim 12, further comprising the steps of:
receiving path search request information (143) that is path search request information on a certificate, said path search request information including at least information on certification authorities at both ends of a path;
searching the path information list (11) based on the information on certification authorities at both ends of the path; and
outputting a search result of path information on the certificate.

14. The certificate path management method according to claim 13, further comprising the steps of:
checking if a time at which the path search request information (143) is received is within an update period of the certificate for which the search is made; and
if the time is out of the update period, extracting information on a current self-signed certificate storage location from the path information list (11) as the search result, said information being included in the attribute information on a certification authority that issued the certificate for which the search is made.

15. The certificate path management method according to claim 14,
wherein, if the time at which the path search request information (143) is received is within the update period, said method further comprises the steps of:
checking whether an issuer of the path request information (143) trusts a currently effective self-signed certificate before updating or a new self-signed certificate after updating; and
extracting information on a self-signed certificate storage location, which is trusted by the issuer, as the path search result.

16. A certificate path management system (10) that manages certificate path information on certificates issued by certification authorities, comprising:
communication means (14) for receiving entry information (104) on the certificates issued by the certification authorities;
storage means (12) for storing a path information list (11) in which path information on the certificates is stored; and
processing means (13) for adding the entry information (104) received by said communication means (14) to the path information list (11) stored in said storage means (12),
wherein, when said communication means (14) receives path search request information(143) on a certificate, said processing means searches the path information list (11) for path information on the certificate specified by the path search request information (143).

17. The certificate path management system (10) according to claim 16,
wherein said processing means (13) checks whether the entry information (104) received by said communication means (14) is entry information (104) from a new certification authority or entry information (104) from an existing certification authority and, if the entry information (104) is from an existing certification authority, updates information on the certification authority.

18. The certificate path management system (10) according to claim 16,
wherein, when said processing means searches for the path information on the certificate based on the path search request information (143) received by said communication means, said processing means checks if a time of day is within an update processing time of the certificate and, if the time of day is out of the update processing time, extracts path information on a current self-signed certificate in the path information list (11).

19. A computer program product stored on a computer readable storage medium for use in a certificate path management system that manages certificate path information on a certificate issued by a certification authority, said program product comprising:
codes for receiving entry information (104) on a certificate issued by the certification authority;
codes for storing a path information list (11) in which certificate path information on certificates is stored;
codes for checking if the received entry information (104) is received from a new certification authority;
if the entry information (104) is received from a new certification authority, codes for creating a node corresponding to the new certification authority in the path information list (11); and
codes for adding the received entry information (104) as attribute information on the node.

20. The computer program product according to claim 19, further comprising:
codes for receiving path search request information (143) that is path search request information on a certificate, said path search request information including at least information on certification authorities at both ends of a path;
codes for searching the path information list (11) based on the information on certification authorities at both ends of the path; and
codes for outputting a search result of path information on the certificate.
